# EUROPEAN PATENT APPLICATION

(11) **EP 4 664 550 A1**
(43) Date of publication of application: **17.12.2025**
(21) Application number: 23931421.4
(22) Date of filing: 06.04.2023
(51) Int. Cl.: H01M 4/139, H01M 4/13, H01M 4/58

(54) **POSITIVE ELECTRODE SHEET AND MANUFACTURING METHOD THEREFOR, BATTERY CELL, BATTERY, AND ELECTRIC DEVICE**

(71) Applicant: Contemporary Amperex Technology Co., Limited, Ningde, Fujian 352100 (CN)
(72) Inventor: ZHAO, Fenggang, Ningde, Fujian 352100 (CN); ZHAO, Zimeng, Ningde, Fujian 352100 (CN); JIN, Haizu, Ningde, Fujian 352100 (CN); SHI, Songjun, Ningde, Fujian 352100 (CN); LAI, Youlei, Ningde, Fujian 352100 (CN); YU, Honggang, Ningde, Fujian 352100 (CN); XU, Xiye, Ningde, Fujian 352100 (CN); LI, Jingru, Ningde, Fujian 352100 (CN)
(74) Representative: Lorenz Seidler Gossel Part. mbB
(86) International application number: PCT/CN2023/086699
(87) International publication number: WO 2024/207353

(57) **Abstract**

Embodiments of the present application provide a positive electrode plate and a manufacturing method therefor, a battery cell, a battery, and an electrical apparatus. The positive electrode plate includes: a positive electrode current collector; a first coating which is arranged on a surface of at least one side of the positive electrode current collector and includes a first active material; a second coating which includes a second active material that is different from the first active material; and a conductive layer which is arranged between the first coating and the second coating and is used for isolating the first coating from the second coating. The performance of a battery including the positive electrode plate is improved.

## Description

### TECHNICAL FIELD

The present application relates to the technical field of batteries, and particularly relates to a positive electrode plate and a preparation method therefor, a battery cell, a battery and an electrical apparatus.

### BACKGROUND

In recent years, lithium-ion batteries have being more and more widely used, they are widely used in energy storage power systems such as hydropower, thermal power, wind power, and solar power stations, as well as electric tools, electric bicycles, electric motorcycles, electric vehicles, military equipment, aerospace and other fields.

Positive electrode plates are an integral part of the batteries, and their performances are important to the performances of the batteries. Therefore, how to provide a positive electrode plate to improve the performance of the battery is a technical problem that needs to be solved urgently.

### SUMMARY

Embodiments of the present application provide a positive electrode plate and a preparation method therefor, a battery cell, a battery and an electrical apparatus, aiming to improve the performance of the battery.

In a first aspect, a positive electrode plate is provided and includes: a positive electrode current collector; a first coating which is arranged on a surface of at least one side of the positive electrode current collector and includes a first active material; a second coating which includes a second active material that is different from the first active material; and a conductive layer which is arranged between the first coating and the second coating and is used for isolating the first coating from the second coating.

The embodiment of the present application provides the positive electrode plate, which includes the positive electrode current collector, the first coating, the second coating and the conductive layer. Specifically, the first coating is arranged on the surface of at least one side of the positive electrode current collector, and the conductive layer is arranged between the first coating and the second coating. The first active material in the first coating is different from the second active material in the second coating, that is, the positive electrode active materials include two different materials, namely the first active material and the second active material, so the positive electrode active materials of the positive electrode plate can have the advantages of the first active material and the second active material, thereby being beneficial to improving the overall performance of the battery. On the other hand, due to the material property difference between the first active material and the second active material, for example, the electronic conductivity is different, if the first active material and the second active material are in direct contact, the property difference between the two materials may make the two materials influence each other, consequently, the performance of the two active materials is reduced, and as a result, the performance of the battery is influenced. Therefore, the first coating and the second coating are isolated by the conductive layer to prevent the first active material and the second active material from being in direct contact, and moreover, the first active material and the second active material are electrically connected. That is, the arranged conductive layer not only avoids the direct contact between the first active material and the second active material, but also can ensure the electrical connection between the first active material and the second active material, and therefore, the first active material and the second active material can exert respective advantages, thus improving the overall performance of the battery.

In a possible embodiment, the first active material includes at least one of an olivine-structure phosphate material and a spinel material.

The olivine structure is a crystal structure of the material, and the material with the olivine structure has high stability, so that when the material is applied to the battery cell, the risks of fire and explosion of the battery cell at high temperature and the like can be reduced, which is conducive to improving the reliability of the battery cell. The olivine-structure phosphate has the advantages of high theoretical specific capacity, high cycling stability, low cost, environment friendliness and the like. The spinel is a mineral consisting of magnesium aluminum oxide and has a tetrahedral crystal form and an octahedral crystal form, for example, a spinel lithium manganate material has outstanding characteristics such as high specific capacity, low cost, and low environmental pollution. The olivine-structure phosphate material and the spinel material used as the first active material can improve the performance of the battery.

In a possible embodiment, the olivine-structure phosphate material includes LiₐFeₑM_{1-b}P₁₋ₘO₄₋ₙ, wherein M includes at least one of other metal elements except Fe, 0≤a≤1.1, 0.3≤b≤1, 0≤m≤0.1, and 0≤n≤0.1, and optionally, M includes at least one of Mn, Al, Cu, Mg, Zn, Ni, Ti, V, Zr, Co, Ga, Sn, Sb, Nb, and Ge; and optionally, the olivine-structure phosphate material includes at least one of lithium iron phosphate (LiFePO₄) and lithium iron manganese phosphate (LiMnFePO₄).

The lithium iron phosphate has the advantages of long cycle life, high thermal stability, high energy density and the like; and the lithium iron manganese phosphate also has the advantages of long cycle life, high thermal stability and the like. The lithium iron phosphate and lithium iron manganese phosphate used as the first active material can improve the cycle performance, energy density and safety of the battery.

In a possible embodiment, the spinel material includes LiNi_{c}Mn_{2-c}O₄, wherein 0≤c<2; and optionally, the spinel material includes lithium manganate (LiMn₂O₄).

The lithium manganate serving as the positive electrode active material has the advantages of low price, high potential, environmental friendliness, high safety performance, high rate capability and the like.

In a possible embodiment, the second active material includes a layered transition metal oxide.

The layered transition metal oxide serving as the positive electrode active material of the battery is an oxide with a multi-layer (generally two-dimensional) structure, and it is obtained by oxidation-reduction reaction of transition metal cations and lattice oxygen anions, and has high energy and high power density. The layered transition metal oxide serving as the second active material can improve the energy density of the battery.

Optionally, the layered transition metal oxide includes at least one of LiCoO₂, LiMnO₂, LiNiO₂, Li_{a'}NiₓCo_{y}M¹_{1-x-y}O_{2+d}, and zLi₂MnO₃·(1-z)LiM²O₂, wherein M¹ includes at least one of Mn, Zr, Al, B, Ta, Mo, W, Nb, Sb, and La; M² includes at least one of Co, Ni, and Mn; and 0.5≤x≤1.0, 0≤y<0.5, x+y<1, 0.2≤a'<1.2, -0.02≤d<0.02, 0<z<1; and optionally, the layered transition metal oxide includes at least one of Li(Ni_{0.6}Co_{0.2}Mn_{0.2})_{1.15}O₂, and Li(Ni_{0.5}Co_{0.2}Mn_{0.3})_{1.07}O₂.

The lithium nickel cobalt manganate (NCM) serving as the positive electrode active material has the advantages of high energy density, high voltage platform, high thermal stability, high cycle performance and the like.

In a possible embodiment, the conductive layer includes a conductive agent and a binder.

The conductive agent plays the role of collecting microcurrent between the active materials, so as to reduce the contact resistance of the electrode to accelerate the movement rate of electrons, and at the same time, it can also effectively increase the migration rate of metal ions in the electrode material, thereby improving the charge-discharge efficiency of the electrode. The binder can bond the active materials with the conductive agent, which enhances the electrical contact between the active materials and the conductive agent, and also stabilizes the structure of the positive electrode plate.

In a possible embodiment, the conductive agent includes at least one of conductive carbon black, superconducting carbon, carbon dots, Ketjen black and carbon nanotubes.

Due to unique components of a carbon structure, the conductive agent made of the carbon material has good conductivity. For example, the conductive carbon black has the advantages of low resistance attribute, high conductivity, small particle size, large specific surface area, roughness, high structure, clean surface (few compounds) and the like; the Ketjen black has high conductivity because of its unique branched chain form; carbon atoms in the carbon nanotubes are subjected to SP² hybridization to gain high modulus and high strength; and the carbon nanotubes also have good flexibility, stretchability and conductivity. The conductive carbon black, the superconducting carbon, the carbon dots, the Ketjen black and the carbon nanotubes used as the conductive agent can improve the conductivity of the battery.

In a possible embodiment, the binder includes at least one of polyvinylidene fluoride, styrene-polybutene rubber, polytetrafluoroethylene, a vinylidene difluoride-tetrafluoroethylene-propylene terpolymer, a vinylidene difluoride-hexafluoropropylene-tetrafluoroethylene terpolymer, a tetrafluoroethylene-hexafluoropropylene copolymer, a vinylidene fluoride-hexafluoropropylene copolymer, a vinylidene fluoride-trichloroethylene copolymer, fluorine-containing acrylate resin, polyacrylonitrile, polyvinylpyrrolidone, polyvinyl acetate, polyethylene-co-vinyl acetate, polyethylene oxide and polyarylester.

In a possible embodiment, the thickness of the conductive layer is 1-15 µm, and optionally, the thickness of the conductive layer is 5-10 µm. On one hand, the thickness of the conductive layer cannot be too small, so that the conductive layer can effectively isolate the first active material from the second active material; and on the other hand, the thickness of the conductive layer cannot be too large, so that the content of the active materials in the positive electrode plate will not be too small, thereby ensuring the energy density of the battery.

In a possible embodiment, the thickness of the first coating is 40-160 µm, and optionally, the thickness of the first coating is 70-140 µm. The thickness of the first coating cannot be too large, so that the waste of the first active material can be decreased and the total volume of the battery can be reduced, and as a result, the production cost is decreased; and the thickness of the first coating cannot be too small, so that the content of the first active material in the positive electrode plate will not be too small, thereby improving the performance of the battery.

In a possible embodiment, the thickness of the second coating is 40-80 µm, and optionally, the thickness of the second coating is 40-60 µm. The thickness of the second coating cannot be too large, so that the waste of the second active material can be decreased and the total volume of the battery can be reduced, and as a result, the production cost is decreased; and the thickness of the second coating cannot be too small, so that the content of the second active material in the positive electrode plate will not be too small, thereby improving the performance of the battery.

In a possible embodiment, on the basis of the total weight of the conductive layer, the conductive layer includes 1wt%-10wt% of the binder, and optionally, 3wt%-7wt%.

In a possible embodiment, on the basis of the total weight of the conductive layer, the conductive layer includes 90wt%-99wt% of the conductive agent, and optionally, 93wt%-97wt%.

The conductive agent in the conductive layer plays the role of collecting microcurrent between the active materials, so as to reduce the contact resistance of the electrode to accelerate the movement rate of electrons, and at the same time, it can also effectively increase the migration rate of metal ions in the electrode material, thereby improving the charge-discharge efficiency of the electrode. If the content of the conductive agent is too small, electronic conduction channels in the cathode electrode plate will be reduced, consequently, the utilization rate of the positive electrode active material will be low, and as a result, the cycle performance and energy density of the battery are reduced.

According to the above technical solution, the weight content of the conductive agent and the weight content of the binder in the conductive layer are set to be within a proper range, so that the conductive layer can effectively exert the functions in isolating and electrically connecting the first active material and the second active material, thereby improving the overall performance of the battery.

In a possible embodiment, on the basis of the total weight of the first coating, the first active material accounts for 90wt%-98wt%, and optionally, 96wt%-97wt%.

In a possible embodiment, on the basis of the total weight of the first coating, the first coating includes 0.1wt%-1wt% of the conductive agent, and optionally, 0.4wt%-0.6wt%.

In a possible embodiment, on the basis of the total weight of the first coating, the first coating includes 1wt%-2wt% of the binder, and optionally, 1.2wt%-1.4wt%.

According to the above technical solution, the weight content of the first active material, the weight content of the conductive agent and the weight content of the binder in the first coating are set to be within a proper range, so that the first active material can effectively exert the functions.

In a possible embodiment, on the basis of the total weight of the second coating, the second active material accounts for 90wt%-98wt%, and optionally, 96wt%-97wt%.

In a possible embodiment, on the basis of the total weight of the second coating, the second coating includes 0.1wt%-1wt% of the conductive agent, and optionally, 0.4wt%-0.6wt%.

In a possible embodiment, on the basis of the total weight of the second coating, the second coating includes 1wt%-2wt% of the binder, and optionally, 1.2wt%-1.4wt%.

According to the above technical solution, the weight content of the second active material, the weight content of the conductive agent and the weight content of the binder in the second coating are set to be within a proper range, so that the second active material can effectively exert the functions.

In a second aspect, a preparation method for a positive electrode plate is provided and includes: providing a positive current collector, and arranging a first coating, a second coating and a conductive layer on the positive current collector, wherein the first coating is arranged on the surface of at least one side of the positive current collector, the conductive layer is arranged between the first coating and the second coating, the first coating includes a first active material, and the second coating includes a second active material which is different from the first active material.

In a third aspect, a battery cell is provided and includes the positive electrode plate in a first aspect and any possible embodiment.

In a fourth aspect, a battery is provided and includes the battery cell in the third aspect.

In a fifth aspect, an electrical apparatus is provided and includes the battery in the fourth aspect.

The embodiment of the present application provides the positive electrode plate, which includes the positive electrode current collector, the first coating, the second coating and the conductive layer. Specifically, the first coating is arranged on the surface of at least one side of the positive electrode current collector, and the conductive layer is arranged between the first coating and the second coating. The first active material in the first coating is different from the second active material in the second coating, that is, the positive electrode active materials include two different materials, namely the first active material and the second active material, so the positive electrode active materials of the positive electrode plate can have the advantages of the first active material and the second active material, thereby being beneficial to improving the overall performance of the battery. On the other hand, due to the material property difference between the first active material and the second active material, for example, the electronic conductivity is different, if the first active material and the second active material are in direct contact, the property difference between the two materials may make the two materials influence each other, consequently, the performance of the two active materials is reduced, and as a result, the performance of the battery is influenced. Therefore, the first coating and the second coating are isolated by the conductive layer to prevent the first active material and the second active material from being in direct contact, and moreover, the first active material and the second active material are electrically connected. That is, the arranged conductive layer not only avoids the direct contact between the first active material and the second active material, but also can ensure the electrical connection between the first active material and the second active material, and therefore, the first active material and the second active material can exert respective advantages, thus improving the overall performance of the battery.

### BRIEF DESCRIPTION OF THE DRAWINGS

In order to more clearly illustrate the technical solution of the embodiments of the present application, the drawings that need to be used in the embodiments of the present application will be briefly introduced below, and it is obvious that the drawings described below are only some embodiments of the present application, and for those skilled in the art, other drawings can also be obtained according to the drawings without paying creative labor.
FIG. 1 is a schematic diagram of a positive electrode plate according to an embodiment of the present application;
FIG. 2 is a schematic diagram of a positive electrode plate according to an embodiment of the present application;
FIG. 3 is a schematic diagram of a preparation method for a positive electrode plate according to an embodiment of the present application;
FIG. 4 is a schematic diagram of a battery cell disclosed by an embodiment of the present application;
FIG. 5 is an exploded schematic structural diagram of a battery cell disclosed by an embodiment of the present application;
FIG. 6 is an exploded schematic structural diagram of a battery disclosed by an embodiment of the present application; and
FIG. 7 is a schematic diagram of an electrical apparatus disclosed by an embodiment of the present application.

The accompanying drawings are not drawn to actual scale.

The attached marks and numbers in the specific embodiments are as follows:
1, positive electrode plate; 10, positive electrode current collector; 11, first coating; 12, second coating; 13, conductive layer; 10, battery; 11, box body; 20, battery cell; 21, case; 22, electrode assembly; and 23, cover plate.

### DETAILED DESCRIPTION

Embodiments of a positive electrode plate and a preparation method therefor, a battery cell, a battery and an electrical apparatus of the present application are specifically disclosed in detail below with appropriate reference to the accompanying drawings. However, there may be cases where unnecessary elaboration is omitted. For example, there are cases where detailed descriptions of well-known items and repeated descriptions of actually identical structures are omitted. This is to avoid unnecessary redundancy in the following descriptions and to facilitate understanding by those skilled in the art. In addition, the accompanying drawings and the following descriptions are provided for the full understanding of the application by those skilled in the art and are not intended to limit the subject matter of the claims.

In the description of the present application, it is to be noted that, unless otherwise indicated, "plurality" refers to more than two; the terms "upper", "lower", "left", "right", "inner", "outer" etc., indicate orientations or positional relationships for convenience and simplification of the present application and do not indicate or imply that the device or element referred to must have a particular orientation, be constructed and operated in a particular orientation, and therefore cannot be construed as limiting the present application. In addition, the terms "first", "second", "third", etc., are used for descriptive purposes only and should not be construed as indicating or implying relative importance.

The "range" disclosed in the present application is defined in a form of a lower limit and an upper limit, and the given range is limited by a selected lower limit and a selected upper limit, which define the boundaries of a particular range. The range defined in this way may include or may not include end values, and may be arbitrarily combined, that is, any lower limit can be combined with any upper limit to form a range. For example, if the ranges 60-120 and 80-110 are listed for specific parameters, it is understood that the ranges 60-110 and 80-120 are also expected. In addition, if the listed minimum range values are 1 and 2 and if the listed maximum range values are 3, 4, and 5, the following ranges can all be expected: 1-3, 1-4, 1-5, 2-3, 2-4, and 2-5. In the present application, unless otherwise specified, the numerical range "a-b" represents an abbreviated representation of any combination of real numbers between a and b, wherein a and b are both real numbers. For example, the numerical range "0-5" indicates that all real numbers between "0-5" have been listed herein, and "0-5" is only a shortened representation of these numerical combinations. In addition, when an integer with a parameter of ≥2 is expressed, it is equivalent to disclosing that the parameter is an integer 2, 3, 4, 5, 6, 7, 8, 9, 10, 11, 12, etc.

Unless otherwise specified, all steps of the present application can be carried out sequentially or randomly, preferably sequentially. For example, the method comprises steps (a) and (b), which means that the method may comprise steps (a) and (b) performed in order, or may comprise steps (b) and (a) performed in order. For example, reference to "the method may further include step (c)" indicates that step (c) may be added to the method in any order, for example, the method may comprise steps (a), (b), and (c), or steps (a), (c), and (b), or steps (c), (a), and (b), etc.

Unless otherwise specifically stated, "including" and "comprising" mentioned in the present application indicate either open inclusion or closed inclusion. For example, the terms "including" and "comprising" may indicate that other components not listed may be further included or comprised, or only the listed components may be included or comprised.

Unless otherwise specifically stated, in the present application, the term "or" is inclusive. For example, the phrase "A or B" means "A, B, or both A and B." More specifically, the condition "A or B" is satisfied under any one of the following conditions: A is true (or present) and B is false (or absent); A is false (or absent) and B is true (or present); or both A and B are true (or present).

Unless otherwise specifically stated, all the embodiments and optional embodiments of the present application can be combined with one another to form new technical solutions.

Unless otherwise specified, all the technical features of the present application and optional technical features may be combined with each other to form a new technical solution.

Lithium-ion batteries are widely used in mobile phones, electric vehicles, storage power stations and other fields due to their high energy density, high voltage, and long life. Positive electrode plates are an integral part of the batteries, and their performances are important to the performances of the batteries.

The cathode electrode plate includes a positive electrode current collector and a positive electrode active material that coats a surface of the positive electrode current collector, and the positive electrode active material is an important factor affecting the performance of the battery. In order to improve the overall performance of the battery, such as making the battery have both good cycle performance and high energy density, two or more positive electrode active materials will coat the surface of the positive electrode current collector, but different active materials have different electrochemical properties, for example, the electronic conductivity is different, which will lead to poor contact between different active materials to affect the overall conductivity of the positive electrode active materials, and as a result, the performance of the battery is influenced.

In view of this, the embodiment of the present application provides the positive electrode plate, which includes the positive electrode current collector, a first coating, a second coating and a conductive layer. Specifically, the first coating is arranged on the surface of at least one side of the positive electrode current collector, and the conductive layer is arranged between the first coating and the second coating. The first active material in the first coating is different from the second active material in the second coating, that is, the positive electrode active materials include two different materials, namely the first active material and the second active material, so the positive electrode active materials of the positive electrode plate can have the advantages of the first active material and the second active material, thereby being beneficial to improving the overall performance of the battery. On the other hand, the first coating and the second coating are isolated by the conductive layer to prevent the first active material and the second active material from being in direct contact, and moreover, the first active material and the second active material are electrically connected. That is, the arranged conductive layer not only avoids the direct contact between the first active material and the second active material, but also can ensure the electrical connection between the first active material and the second active material, and therefore, the first active material and the second active material can exert respective advantages, thus improving the overall performance of the battery.

A plurality of embodiments of the present application are described in detail below.

### [Positive electrode plate]

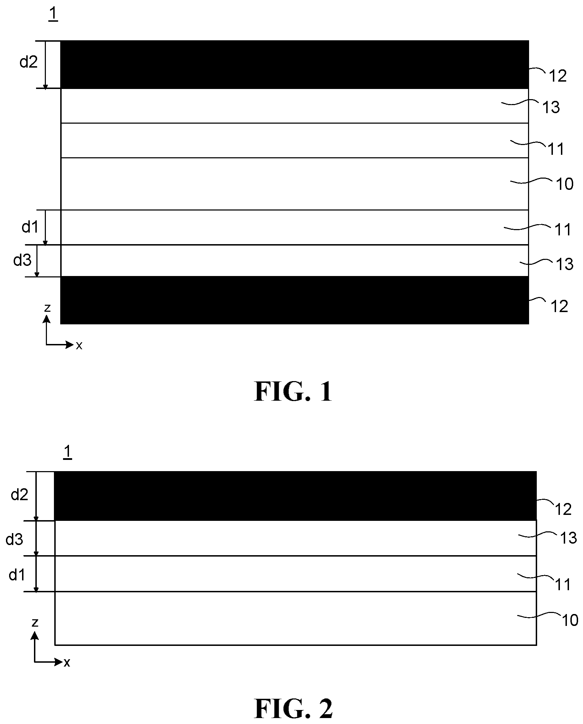

FIG. 1 is a schematic diagram of a positive electrode plate according to an embodiment of the present application. As shown in FIG. 1, a positive electrode plate 1 includes a positive electrode current collector 10, a first coating 11, a second coating 12 and a conductive layer 13.

The conductive layer 13 is arranged between the first coating 11 and the second coating 12, and the first coating is arranged on a surface of the positive electrode current collector 10. For example, as shown in FIG. 1, in the thickness direction (z direction in FIG. 1) of the positive electrode plate 1, the positive electrode current collector 10, the first coating 11, the conductive layer 13 and the second coating 12 are sequentially arranged.

The positive electrode current collector 10 has two surfaces arranged in the thickness direction, and the first coating 11, the conductive layer 13 and the second coating 12 are arranged on the surface of the same side of the positive electrode current collector 10. Optionally, as shown in FIG. 1, the two surfaces of the positive electrode current collector 10 are each provided with the first coating 11, the conductive layer 13 and the second coating 12.

FIG. 2 is a schematic diagram of a positive electrode plate according to an embodiment of the present application. In some other embodiments, as shown in FIG. 2, one of the two surfaces opposite in the thickness direction of the positive electrode current collector 10 is provided with the first coating 11, the conductive layer 13 and the second coating 12.

The first coating 11 includes a first active material, and the second coating 12 includes a second active material which is different from the first active material.

Optionally, the first active material and the second active material are different in crystal structure, wherein the crystal structure can represent the arrangement rule of atoms in the materials in space. For example, the first active material includes a phosphate material having an olivine structure and a material having a spinel structure, and the second active material includes a transition metal oxide having a layered structure. The material with the olivine structure may include various materials such as lithium iron phosphate (LiFePO₄) and lithium manganese iron phosphate (LiMnFePO₄). The transition metal oxide with the layered structure may include various materials such as LiMO₂, and M includes at least one of Co, Ni, and Mn.

The conductive layer 13 is used for isolating the first active material from the second active material. The arranged conductive layer 13 can reduce the risk of contact between the first active material and the second active material, and thus the influence of the performance difference between the first active material and the second active material on the battery cell can be reduced. Moreover, the conductive layer 13 can realize electrical connection between the first active material and the second active material.

For example, the first active material is lithium iron phosphate with a carbon coating layer, and the second active material is a ternary material. The first active material is attached to or coats the surface of the second active material, which may cause aggregation of the electrons on the surface of the second active material, and the aggregated electrons will influence intercalating of lithium ions into the second active material, and as a result, the cycle performance of the battery cell is influenced. The arranged conductive layer 13 isolates the first active material from the second active material, so that the risk of attachment or coating of the first active material to the second active material can be reduced, and the phenomenon of electron aggregating on the surface of the second active material caused by the conductivity difference between the first active material and the second active material is relieved, thereby being beneficial to reducing the risk of intercalating of the aggregated electrons into the second active material and improving the cycle performance of the battery cell.

The cycle performance of the battery cell can be measured by a capacity retention ratio, and the capacity retention ratio is a ratio of a retention capacity to a first discharge capacity. The retention capacity may refer to the discharge capacity of the battery cell after the battery cell is subjected to a certain number of charge-discharge cycles. The first discharge capacity may refer to the discharge capacity of the battery cell when the battery cell is subjected to a first charge-discharge test.

Optionally, the positive electrode current collector 10 may be a metal foil or composite current collector. For example, if it is the metal foil, an aluminum foil can be adopted. The composite current collector may comprise a polymer material substrate layer and a metal layer formed on at least one surface of the polymer material substrate layer. The composite current collector can be formed by forming a metal material (aluminum, aluminum alloy, nickel, nickel alloy, titanium, titanium alloy, silver, silver alloy and the like) on a polymer material substrate material (such as polypropylene (PP), polyethylene glycol terephthalate (PET), polybutylene terephthalate (PBT), polystyrene (PS), polyethylene (PE) and the like).

The embodiment of the present application provides the positive electrode plate 1, which includes the positive electrode current collector 10, the first coating 11, the second coating 12 and the conductive layer 13. The first active material in the first coating 11 is different from the second active material in the second coating 12, that is, the positive electrode active materials include two different materials, namely the first active material and the second active material, so the positive electrode active materials of the positive electrode plate 1 can have the advantages of the first active material and the second active material, thereby being beneficial to improving the overall performance of the battery. On the other hand, the first coating 11 and the second coating 12 are isolated by the conductive layer 13 to prevent the first active material and the second active material from being in direct contact, and moreover, the first active material and the second active material are electrically connected. That is, the arranged conductive layer 13 not only avoids the direct contact between the first active material and the second active material, but also can ensure the electrical connection between the first active material and the second active material, and therefore, the first active material and the second active material can exert respective advantages, thus improving the overall performance of the battery.

Optionally, in some embodiments, the first active material includes at least one of an olivine-structure phosphate material and a spinel material.

The olivine structure is a crystal structure of the material, and the material with the olivine structure has high stability, so that when the material is applied to the battery cell, the risks of fire and explosion of the battery cell at high temperature and the like can be reduced, which is conducive to improving the reliability of the battery cell. The olivine-structure phosphate has the advantages of high theoretical specific capacity, high cycling stability, low cost, environment friendliness and the like. The spinel is a mineral consisting of magnesium aluminum oxide and has a tetrahedral crystal form and an octahedral crystal form, for example, a spinel lithium manganate material has outstanding characteristics such as high specific capacity, low cost, and low environmental pollution. The olivine-structure phosphate material and the spinel material used as the first active material can improve the performance of the battery.

Optionally, the olivine-structure phosphate material includes LiₐFeₑM_{1-b}P₁₋ₘO₄₋ₙ, wherein M includes at least one of other metal elements except Fe, 0≤a≤1.1, 0.3≤b≤1, 0≤m≤0.1, and 0≤n≤0.1, and optionally, M includes at least one of Mn, Al, Cu, Mg, Zn, Ni, Ti, V, Zr, Co, Ga, Sn, Sb, Nb, and Ge; and optionally, the olivine-structure phosphate material includes at least one of lithium iron phosphate (LiFePO₄) and lithium iron manganese phosphate (LiMnFePO₄).

It is to be understood that the de-intercalation and consumption of lithium may occur in the charge-discharge process of the battery, and the molar contents of lithium are different when the battery is discharged to different states, and the limitation to the range of a in the formula LiₐFe_{b}M_{1-b}P₁₋ₘO₄₋ₙ includes the molar contents of lithium when the battery is in different charging and discharging states (generally, the voltage of the battery is between 2-5 V).

It is to be understood that LiFePO₄ and LiMnFePO₄ are only an exemplary explanation of a substance used as the first active material in the embodiment of the present application, and does not constitute a limitation to the first active material of the present application.

The LiFePO₄ has the advantages of long cycle life, high thermal stability, high energy density and the like; and the LiMnFePO₄ also has the advantages of long cycle life, high thermal stability and the like. The LiFePO₄ and LiMnFePO₄ used as the first active material can improve the cycle performance, energy density and safety of the battery.

Optionally, the spinel material includes LiNi_{c}Mn_{2-c}O₄, wherein 0≤c<2; and optionally, the spinel material includes lithium manganate (LiMn₂O₄).

It is to be understood that LiMn₂O₄ is only an exemplary explanation of a substance used as the first active material in the embodiment of the present application, and does not constitute a limitation to the first active material of the present application.

The LiMn₂O₄ serving as the positive electrode active material has the advantages of low price, high potential, environmental friendliness, high safety performance, high rate capability and the like.

Optionally, in some embodiments, the second active material includes a layered transition metal oxide.

The layered transition metal oxide is an oxide with a multi-layer (generally two-dimensional) structure, and it is obtained by oxidation-reduction reaction of transition metal cations and lattice oxygen anions, and has high energy and high power density. The layered transition metal oxide serving as the second active material can improve the energy density of the battery.

Optionally, the layered transition metal oxide includes at least one of LiCoO₂, LiMnO₂, LiNiO₂, Li_{a'}NiₓCo_{y}M¹_{1-x-y}O_{2+d}, and zLi₂MnO₃·(1-z)LiM²O₂, wherein M¹ includes at least one of Mn, Zr, Al, B, Ta, Mo, W, Nb, Sb, and La; M² includes at least one of Co, Ni, and Mn; and 0.5≤x≤1.0, 0≤y<0.5, x+y<1, 0.2≤a'<1.2, -0.02≤d<0.02, 0<z<1; and optionally, the layered transition metal oxide includes at least one of Li(Ni_{0.6}Co_{0.2}Mn_{0.2})_{1.15}O₂, and Li(Ni_{0.5}Co_{0.2}Mn_{0.3})_{1.07}O₂.

The lithium nickel cobalt manganate (NCM) serving as the positive electrode active material has the advantages of high energy density, high voltage platform, high thermal stability, high cycle performance and the like.

It is to be understood that NCM is only an exemplary description of a substance used as the second active material in the embodiment of the present application, and does not constitute the limitation to the second active material of the present application.

For example, the second active material may include a ternary material, a lithium-rich manganese-based material, and a disordered rock salt phase structure material. The "ternary material" refers to an entire material composed of three chemical constituents (elements) and components (simple substances and compounds), for example, the ternary material used as the battery positive electrode active material is usually a material containing three elements of nickel, cobalt and manganese (or nickel, cobalt and aluminum) synthesized by taking nickel salt, cobalt salt and manganese salt/aluminum salt as raw materials, the proportion of nickel, cobalt and manganese (or nickel, cobalt and aluminum) in the ternary material can be adjusted according to actual needs, and the ternary material has the advantages of high energy density, good cycle performance and the like. The ternary material, the lithium-rich manganese-based material and the disordered rock salt phase structure material are used as the second active material, which can improve the performance of the battery.

Optionally, in some embodiments, the conductive layer 13 includes a conductive agent and a binder.

The conductive agent plays the role of collecting microcurrent between the active materials, so as to reduce the contact resistance of the electrode to accelerate the movement rate of electrons, and at the same time, it can also effectively increase the migration rate of metal ions in the electrode material, thereby improving the charge-discharge efficiency of the electrode. The binder can bond the active materials with the conductive agent, which enhances the electrical contact between the active materials and the conductive agent, and also stabilizes the structure of the positive electrode plate.

Optionally, the conductive layer 13 does not include the active materials, only the conductive agent and the binder.

Optionally, the conductive layer 13 is a porous film with the conductive agent and the binder.

Optionally, the conductive layer 13 can be bonded with the first coating 11 and the second coating 12 to reduce the risk of deformation and wrinkling of the positive electrode plate 1.

Optionally, in some embodiments, the conductive agent includes at least one of conductive carbon black, superconducting carbon, carbon dots, Ketjen black and carbon nanotubes.

Due to unique components of a carbon structure, the conductive agent made of the carbon material has good conductivity. For example, the conductive carbon black has the advantages of low resistance attribute, high conductivity, small particle size, large specific surface area, roughness, high structure, clean surface (few compounds) and the like; the Ketjen black has high conductivity because of its unique branched chain form; carbon atoms in the carbon nanotubes are subjected to SP² hybridization to gain high modulus and high strength; and the carbon nanotubes also have good flexibility, stretchability and conductivity. The conductive carbon black, the superconducting carbon, the carbon dots, the Ketjen black and the carbon nanotubes used as the conductive agent can improve the conductivity of the battery.

Optionally, in some embodiments, the binder includes at least one of polyvinylidene fluoride, styrene-polybutene rubber, polytetrafluoroethylene, a vinylidene difluoride-tetrafluoroethylene-propylene terpolymer, a vinylidene difluoride-hexafluoropropylene-tetrafluoroethylene terpolymer, a tetrafluoroethylene-hexafluoropropylene copolymer, a vinylidene fluoride-hexafluoropropylene copolymer, a vinylidene fluoride-trichloroethylene copolymer, fluorine-containing acrylate resin, polyacrylonitrile, polyvinylpyrrolidone, polyvinyl acetate, polyethylene-co-vinyl acetate, polyethylene oxide and polyarylester.

Optionally, in some embodiments, as shown in FIG. 1 and FIG. 2, the thickness d3 of the conductive layer 13 is 1-15 µm, and optionally, the thickness d3 of the conductive layer 13 is 5-10 µm.

Specifically, the thickness d3 of the conductive layer 13 can be 1 µm, 2 µm, 3 µm, 4 µm, 5 µm, 6 µm, 7 µm, 8 µm, 9 µm, 10 µm, 11 µm, 12 µm, 13 µm, 14 µm, and 15 µm or a numerical value between any two of the above.

On one hand, the thickness of the conductive layer 13 cannot be too small, so that the conductive layer 13 can effectively isolate the first active material from the second active material; and on the other hand, the thickness of the conductive layer 13 cannot be too large, so that the content of the active materials in the positive electrode plate will not be too small, thereby ensuring the energy density of the battery.

Optionally, in some embodiments, as shown in FIG. 1 and FIG. 2, the thickness d1 of the first coating 11 is 40-160 µm, and optionally, the thickness d1 of the first coating 11 is 70-140 µm.

Specifically, the thickness d1 of the first coating 11 can be 40 µm, 50 µm, 60 µm, 70 µm, 80 µm, 90 µm, 100 µm, 110 µm, 120 µm, 130 µm, 140 µm, 150 µm ,and 160 µm or a numerical value between any two of the above.

The thickness of the first coating 11 cannot be too large, so that the waste of the first active material can be decreased and the total volume of the battery can be reduced, and as a result, the production cost is decreased; and the thickness of the first coating cannot be too small, so that the content of the first active material in the positive electrode plate will not be too small, thereby improving the performance of the battery.

Optionally, in some embodiments, as shown in FIG. 1 and FIG. 2, the thickness d2 of the second coating 12 is 40-80 µm, and optionally, the thickness d2 of the second coating 12 is 40-60 µm.

Specifically, the thickness d2 of the second coating 12 can be 40 µm, 50 µm, 60 µm, 70 µm, and 80 µm or a numerical value between any two of the above.

The thickness of the second coating cannot be too large, so that the waste of the second active material can be decreased and the total volume of the battery can be reduced, and as a result, the production cost is decreased; and the thickness of the second coating cannot be too small, so that the content of the second active material in the positive electrode plate will not be too small, thereby improving the performance of the battery.

Optionally, in some embodiments, on the basis of the total weight of the conductive layer, the conductive layer includes 1wt%-10wt% of the binder, and optionally, 3wt%-7wt%.

Specifically, the weight percentage of the binder in the conductive layer can be 1wt%, 2wt%, 3wt%, 4wt%, 5wt%, 6wt%, 7wt%, 8wt%, 9wt%, 10wt% or a numerical value between any two of the above.

Optionally, in some embodiments, on the basis of the total weight of the conductive layer, the conductive layer includes 90wt%-99wt% of the conductive agent, and optionally, 93wt%-97wt%.

Specifically, the weight percentage of the conductive agent in the conductive layer can be 90wt%, 91wt%, 92wt%, 93wt%, 94wt%, 95wt%, 96wt%, 97wt%, 98wt%, 99wt% or a numerical value between any two of the above.

The conductive agent in the conductive layer plays the role of collecting microcurrent between the active materials, so as to reduce the contact resistance of the electrode to accelerate the movement rate of electrons, and at the same time, it can also effectively increase the migration rate of metal ions in the electrode material, thereby improving the charge-discharge efficiency of the electrode. If the content of the conductive agent is too small, electronic conduction channels in the cathode electrode plate will be reduced, consequently, the utilization rate of the positive electrode active material will be low, and as a result, the cycle performance and energy density of the battery are reduced. Therefore, the content of the conductive agent in the conductive layer is set to be 90-99 wt%, thus being conducive to improving the overall performance of the battery.

According to the above technical solution, the weight content of the conductive agent and the weight content of the binder in the conductive layer 13 are set to be within a proper range, so that the conductive layer 13 can effectively exert the functions in isolating and electrically connecting the first active material and the second active material, thereby improving the overall performance of the battery.

Optionally, in some embodiments, on the basis of the total weight of the first coating, the first active material accounts for 90wt%-98wt%, and optionally, 96wt%-97wt%.

Specifically, the weight percentage of the first active material in the first coating can be 90wt%, 91wt%, 92wt%, 93wt%, 94wt%, 95wt%, 96wt%, 97wt%, and 98wt% or a numerical value between any two of the above.

Optionally, in some embodiments, on the basis of the total weight of the first coating, the first coating includes 0.1wt%-1wt% of the conductive agent, and optionally, 0.4wt%-0.6wt%.

Specifically, the weight percentage of the conductive agent in the first coating can be 0.1wt%, 0.2wt%, 0.3wt%, 0.4wt%, 0.5wt%, 0.6wt%, 0.7wt%, 0.8wt%, 0.9wt%, and 1wt% or a numerical value between any two of the above.

Optionally, in some embodiments, on the basis of the total weight of the first coating, the first coating includes 1wt%-2wt% of the binder, and optionally, 1.2wt%-1.4wt%.

Specifically, the weight percentage of the binder in the first coating can be 1wt%, 1.1wt%, 1.2wt%, 1.3wt%, 1.4wt%, 1.5wt%, 1.6wt%, 1.7wt%, 1.8wt%, 1.9wt%, and 2wt% or a numerical value between any two of the above.

According to the above technical solution, the weight content of the first active material, the weight content of the conductive agent and the weight content of the binder in the first coating 11 are set to be within a proper range, so that the first active material can effectively exert the functions.

Optionally, in some embodiments, on the basis of the total weight of the second coating, the second active material accounts for 90wt%-98wt%, and optionally, 96wt%-97wt%.

Specifically, the weight percentage of the second active material in the second coating can be 90wt%, 91wt%, 92wt%, 93wt%, 94wt%, 95wt%, 96wt%, 97wt%, and 98wt% or a numerical value between any two of the above.

Optionally, in some embodiments, on the basis of the total weight of the second coating, the second coating includes 0.1wt%-1wt% of the conductive agent, and optionally, 0.4wt%-0.6wt%.

Specifically, the weight percentage of the conductive agent in the second coating can be 0.1wt%, 0.2wt%, 0.3wt%, 0.4wt%, 0.5wt%, 0.6wt%, 0.7wt%, 0.8wt%, 0.9wt%, and 1wt% or a numerical value between any two of the above.

Optionally, in some embodiments, on the basis of the total weight of the second coating, the second coating includes 1wt%-2wt% of the binder, and optionally, 1.2wt%-1.4wt%.

Specifically, the weight percentage of the binder in the first coating can be 1wt%, 1.1wt%, 1.2wt%, 1.3wt%, 1.4wt%, 1.5wt%, 1.6wt%, 1.7wt%, 1.8wt%, 1.9wt%, and 2wt% or a numerical value between any two of the above.

According to the above technical solution, the weight content of the second active material, the weight content of the conductive agent and the weight content of the binder in the second coating 12 are set to be within a proper range, so that the second active material can effectively exert the functions.

### [Preparation method for positive electrode plate]

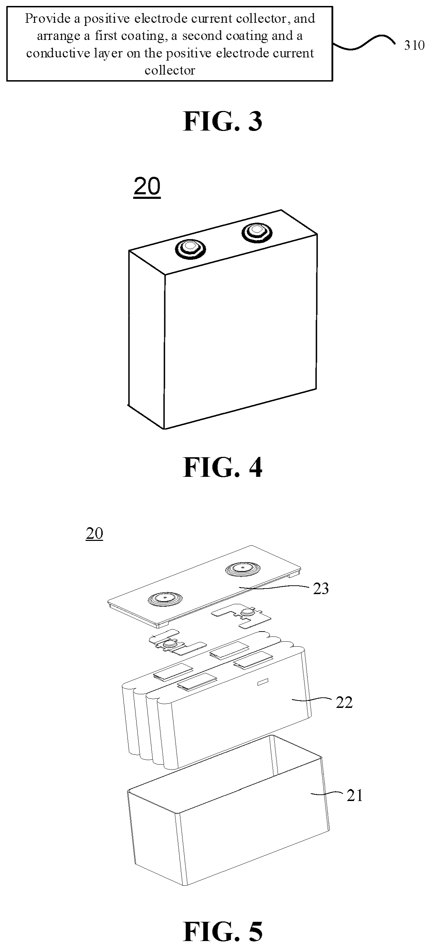

FIG. 3 is a preparation method for a positive electrode plate according to an embodiment of the present application. As shown in FIG. 3, the method 300 includes the following steps:
Step 310, providing a positive current collector, and arranging a first coating, a second coating and a conductive layer on the positive current collector.

Wherein the first coating is arranged on the surface of at least one side of the positive current collector, the conductive layer is arranged between the first coating and the second coating, the first coating includes a first active material, and the second coating includes a second active material which is different from the first active material.

The positive electrode plate prepared by the above method is beneficial to improving the performance of the battery when being applied to the battery.

### [Negative electrode plate]

The negative electrode plate includes a negative electrode current collector and a negative electrode film layer arranged on at least one surface of the negative electrode current collector, and the negative electrode film layer includes a negative electrode active material.

For example, the negative electrode current collector has two surfaces opposite to each other in a thickness direction of the negative electrode current collector, and the negative electrode film layer is arranged on either or both of the two opposite surfaces of the negative electrode current collector.

In some embodiments, the negative electrode current collector can be a metal foil or a composite current collector. For example, as the metal foil, a copper foil can be used. The composite current collector can comprise a polymer material substrate layer and a metal layer formed on at least one surface of the polymer material substrate. The composite current collector can be formed by forming a metal material (copper, copper alloy, nickel, nickel alloy, titanium, titanium alloy, silver, and silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, a negative electrode active material for the battery well known in the art may be used as the negative electrode active material. By way of example, the negative electrode active material can comprise at least one of the following materials: artificial graphite, natural graphite, soft carbon, hard carbon, a silicon-based material, a tin-based material, lithium titanate, etc. The silicon-based material can be selected from at least one of elemental silicon, a silicon-oxygen compound, a silicon-carbon composite, a silicon-nitrogen composite, or a silicon alloy. The tin-based material can be selected from at least one of elemental tin, a tin-oxygen compound, or a tin alloy. However, the present application is not limited to these materials. Other traditional materials that can be used as negative electrode active materials for batteries may also be used. These negative electrode active materials may be used alone or in a combination of two or more thereof.

In some embodiments, the negative electrode film layer further optionally comprises a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally comprises a conductive agent. The conductive agent may be selected from at least one of superconducting carbon, acetylene black, carbon black, Ketjen black, carbon dot, carbon nanotube, graphene, and carbon nanofiber.

In some embodiments, the negative electrode film layer further optionally comprises other adjuvants, for example, a thickener (such as sodium carboxymethyl cellulose (CMC-Na)).

In some embodiments, the negative electrode plate may be prepared by: dispersing the above components, such as the negative electrode active material, the conductive agent, the binder and any other components, for preparing the negative electrode plate in a solvent (such as deionized water) to form a negative electrode slurry; and coating the negative electrode slurry on a negative electrode current collector, and performing drying and cold pressing processes to obtain the negative electrode plate.

### [Electrolyte]

The electrolyte plays a role in conducting ions between the positive electrode plate and negative electrode plate. The type of the electrolyte is not specifically limited in the present application and can be selected according to requirements. For example, the electrolyte can be liquid, gelled, or all solid.

In some embodiments, an electrolyte solution is used as the electrolyte. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte solution further optionally comprises an additive. For example, the additive may include a negative electrode film-forming additive or a positive electrode film-forming additive, or may further include an additive that can improve some performance of the battery, such as an additive that improves overcharge performance of the battery or an additive that improves high-temperature or low-temperature performance of the battery.

### [Separator]

In some embodiments, the battery cell also includes a separator. A type of the separator is not particularly limited in the present application, and any well-known separator having good chemical stability, mechanical stability, and a porous structure may be selected.

In some embodiments, the material of the separator can be selected from at least one of glass fibers, non-woven fabric, polyethylene, polypropylene, and polyvinylidene fluoride. The separator can be either a single-layer thin film or a multilayer composite thin film without special limitations. When the separator is a multilayer composite thin film, the materials of the layers can be the same or different without special limitations.

In some embodiments, the positive electrode sheet, the negative electrode sheet and the separator can be made into an electrode assembly by a winding process or a lamination process.

The battery cell, the battery and the electrical apparatus in the present application are described below with reference to the accompanying drawings.

The embodiment of the present application also provides the battery cell. The battery cell includes the positive electrode plate, the negative electrode plate, the electrolyte and the separator in the above embodiments. In the charge-discharge process of the battery, active ions are intercalated and deintercalated back and forth between the positive electrode plate and the negative electrode plate. The electrolyte plays a role in conducting ions between the positive electrode plate and negative electrode plate. The separator is arranged between the positive electrode sheet and the negative electrode sheet, mainly plays a role in preventing the positive electrode and the negative electrode from short circuit, and can enable the ions to pass through.

It is to be understood that the process of "intercalation" in the present application refers to the process of the active ions intercalating into the positive electrode active material or the negative electrode active material due to the electrochemical reaction, and the processes of "remove" and "de-intercalation" in the present application refer to the process of removing the active ions from the positive electrode active material or the negative electrode active material due to electrochemical reaction.

In some embodiments, the battery cell may include an outer package. The outer package may be used to encapsulate the electrode assembly and the electrolyte mentioned above.

In some embodiments, the outer package of the battery cell may be a hard shell, such as a hard plastic shell, an aluminum shell, and a steel shell. The outer package of the battery cell may also be a soft bag, such as a pouch-type soft bag. The material of the soft bag may be a plastic, and examples of the plastic may include polypropylene, polybutylene terephthalate, polybutylene succinate, and the like.

In the present application, there is no special limitation to the shape of the battery cell, and the shape of the battery cell can be cylindrical, square or any other shape. For example, FIG. 4 shows the battery cell 20 with a square structure as an example.

In some embodiments, with reference to FIG. 5, the outer package can include a case 21 and a cover plate 23. Wherein the case 21 can include a bottom plate and a side plate connected to the bottom plate, and the bottom plate and the side plate are enclosed to form an accommodating cavity. The case 21 is provided with an opening in communication with the accommodating cavity, and the cover plate 23 can cover the opening to close the accommodating cavity. The positive electrode sheet, the negative electrode sheet and the separator can be processed to form an electrode assembly 22 by a winding process or a lamination process. The electrode assembly 22 is encapsulated within the accommodating cavity. The electrolyte solution infiltrates in the electrode assembly 22. There can be one or more electrode assemblies 22 in the secondary battery 20, and the number can be selected by those skilled in the art according to specific actual requirements.

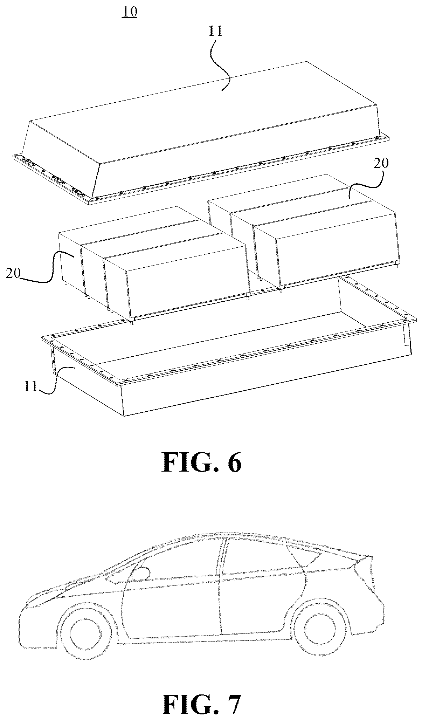

In some embodiments, the battery 10 can include a plurality of battery cells 20. For example, as shown in FIG. 6, it is a schematic structural diagram of the battery 10 according to an embodiment of the present application, and the battery 10 can include a plurality of battery cells 20. The battery 10 can also include a box body 11, the interior of the box body 11 is of a hollow structure, and the plurality of battery cells 20 are accommodated in the box body 11. For example, the plurality of battery cells 20 are arranged in the box body 11 after being connected in parallel or in series or in series-parallel combination.

Optionally, the battery 10 can also include other structures, which are not listed one by one. For example, the battery 10 may further include a bus component, and the bus component is configured to achieve electrical connection between the plurality of battery cells 20, such as parallel connection, series connection or series-parallel connection. Specifically, the bus component may achieve electrical connection between the battery cells 20 by connecting electrode terminals of the battery cells 20. Further, the bus component may be fixed to the electrode terminals of the battery cells 20 by welding. The electric energy of the plurality of battery cells 20 can be further led out through a conductive mechanism penetrating through the box body 11. Optionally, the conductive mechanism can also belong to a bus component.

Depending on different power requirements, the number of battery cells 20 may be set to any value. The plurality of battery cells 20 can be connected in series, in parallel or in parallel-series connection to implement larger capacity or power. Each battery 10 may include a large quantity of battery cells 20, and therefore, in order to facilitate installation, the battery cells 20 may be arranged in groups, and each group of battery cells 20 forms a battery module. The number of the battery cells 20 in the battery module is not limited, and it can be set according to requirements. The battery can include a plurality of battery modules, and the battery modules can be connected in series, in parallel or in series-parallel combination.

In addition, the present application further provides an electrical apparatus, which includes at least one of the battery cell, the battery module, or the battery provided by the present application. The secondary cell, the battery module or the battery can be used as a power supply for the electrical apparatus and can also be used as an energy storage unit for the electrical apparatus. The electrical apparatus can include a mobile device (such as a mobile phone, and a notebook computer), an electric vehicle (such as a pure electric vehicle, a hybrid electric vehicle, a plug-in hybrid electric vehicle, an electric bicycle, an electric scooter, an electric golf cart, and an electric truck), an electric train, a ship, a satellite, an energy storage system and the like, but not limited thereto.

For the electrical apparatus, the battery cell, the battery module or the battery can be selected according to the use requirements.

In FIG. 7, the electrical apparatus is taken as an example. The electric device is the pure electric vehicle, the hybrid electric vehicle, the plug-in hybrid electric vehicle or the like. In order to meet the requirements of the electrical apparatus on high power and high energy density of the secondary battery, the battery or the battery module can be adopted.

As another example, the device can be the mobile phone, a tablet personal computer, the notebook computer and the like. The apparatus is generally required to be light and thin, and battery cell can be adopted as the power source.

### [Examples]

Examples of the present application will be described below. The Examples described below are illustrative and only used to explain the present application, and cannot be construed as limiting the present application. In Examples in which no specific technologies or conditions are specified, technologies or conditions described in the literature in the art or product specifications are followed. If the manufacturer of the reagent or instrument is not indicated, it is a conventional product that can be obtained through commercial purchase.

### (1) Preparation of positive electrode plate

Positive electrode plate 1: lithium iron phosphate (LiFePO₄), conductive carbon black, carbon nanotubes (CNT) and polyvinylidene fluoride (PVDF) were dissolved into a solvent N-methyl pyrrolidone (NMP) according to the weight ratio of 97.6:0.6:0.4:1.4, and stirred and uniformly mixed to prepare a first coating.

Lithium nickel cobalt manganese oxide (NCM622), conductive carbon black, the CNT and the PVDF were dissolved into the solvent NMP according to the weight ratio of 97.6:0.6:0.4:1.4, and stirred and uniformly mixed to prepare a second coating.

The binder carboxymethyl cellulose (CMC) and the conductive agent conductive carbon black were dissolved into solvent de-ionized water according to the weight ratio of 3:97, and stirred and uniformly mixed to prepare a conductive layer.

The first coating, the second coating and the conductive layer were coated on a positive electrode current collector at the same time or step by step by extrusion coating according to a structure of the positive electrode plate shown in FIG. 1 or FIG. 2 in the embodiment of the present application (for example, the first coating, the second coating and the conductive layer could be coated on the positive electrode current collector at the same time by an LOM extrusion coating machine), so as to prepare a positive electrode plate 1. The thickness of the first coating was 130 µm, the thickness of the second coating was 50 µm, and the thickness of the conductive layer was 1 µm.

Positive electrode plate 2: the positive electrode plate 2 was different from the positive electrode plate 1 in that the thickness of the conductive layer was 5 µm, and accordingly, the positive electrode plate 2 was prepared.

Positive electrode plate 3: the positive electrode plate 3 was different from the positive electrode plate 1 in that the thickness of the conductive layer was 10 µm, and accordingly, the positive electrode plate 3 was prepared.

Positive electrode plate 4: the positive electrode plate 4 was different from the positive electrode plate 1 in that the thickness of the conductive layer was 15 µm, and accordingly, the positive electrode plate 4 was prepared.

Positive electrode plate 5: the positive electrode plate 5 was different from the positive electrode plate 2 in that the thickness of the first coating was 40 µm, and accordingly, the positive electrode plate 5 was prepared.

Positive electrode plate 6: the positive electrode plate 6 was different from the positive electrode plate 2 in that the thickness of the first coating was 70 µm, and accordingly, the positive electrode plate 6 was prepared.

Positive electrode plate 7: the positive electrode plate 7 was different from the positive electrode plate 2 in that the thickness of the first coating was 140 µm, and accordingly, the positive electrode plate 7 was prepared.

Positive electrode plate 8: the positive electrode plate 8 was different from the positive electrode plate 2 in that the thickness of the first coating was 160 µm, and accordingly, the positive electrode plate 8 was prepared.

Positive electrode plate 9: the positive electrode plate 9 was different from the positive electrode plate 2 in that the thickness of the second coating was 40 µm, and accordingly, the positive electrode plate 9 was prepared.

Positive electrode plate 10: the positive electrode plate 10 was different from the positive electrode plate 2 in that the thickness of the second coating was 60 µm, and accordingly, the positive electrode plate 10 was prepared.

Positive electrode plate 11: the positive electrode plate 11 was different from the positive electrode plate 2 in that the thickness of the second coating was 80 µm, and accordingly, the positive electrode plate 11 was prepared.

Positive electrode plate 12: the positive electrode plate 12 was different from the positive electrode plate 2 in that the lithium iron phosphate (LiMnFePO₄), the conductive carbon black, the CNT and the PVDF were dissolved into the solvent NMP according to the weight ratio of 97.6:0.6:0.4:1.4, and were stirred and uniformly mixed to obtain the first coating, and the thickness of the first coating was 130 µm, and therefore, the positive electrode plate 12 was prepared.

Positive electrode plate 13: the positive electrode plate 13 was different from the positive electrode plate 2 in that LiCoO₂, the conductive carbon black, the CNT and the PVDF were dissolved into the solvent NMP according to the weight ratio of 97.6:0.6:0.4:1.4, and were stirred and uniformly mixed to obtain the second coating, and the thickness of the second coating was 50 µm, and therefore, the positive electrode plate 13 was prepared.

Positive electrode plate 14: the positive electrode plate 14 was different from the positive electrode plate 2 in that the thickness of the conductive layer was 20 µm, and accordingly, the positive electrode plate 14 was prepared.

Positive electrode plate 15: the positive electrode plate 15 was different from the positive electrode plate 2 in that the thickness of the first coating was 30 µm, and accordingly, the positive electrode plate 15 was prepared.

Positive electrode plate 16: the positive electrode plate 16 was different from the positive electrode plate 2 in that the thickness of the first coating was 170 µm, and accordingly, the positive electrode plate 16 was prepared.

Positive electrode plate 17: the positive electrode plate 17 was different from the positive electrode plate 2 in that the thickness of the second coating was 30 µm, and accordingly, the positive electrode plate 17 was prepared.

Positive electrode plate 18: the positive electrode plate 18 was different from the positive electrode plate 2 in that the thickness of the second coating was 90 µm, and accordingly, the positive electrode plate 18 was prepared.

Positive electrode plate 19: the positive electrode plate 19 was different from the positive electrode plate 2 in that the weight ratio of the binder CMC to the conductive agent conductive carbon black in the conductive layer was 10:90, and accordingly, the positive electrode plate 19 was prepared.

Positive electrode plate 20: the positive electrode plate 20 was different from the positive electrode plate 2 in that the weight ratio of the binder CMC to the conductive agent conductive carbon black in the conductive layer was 7:93, and accordingly, the positive electrode plate 20 was prepared.

Positive electrode plate 21: the positive electrode plate 21 was different from the positive electrode plate 2 in that the weight ratio of the binder CMC to the conductive agent conductive carbon black in the conductive layer was 1:99, and accordingly, the positive electrode plate 21 was prepared.

Positive electrode plate 22: the positive electrode plate 22 was different from the positive electrode plate 2 in that the conductive layer was not arranged, and accordingly, the positive electrode plate 22 was prepared.

### (2) Preparation of negative electrode plate

Artificial graphite, conductive carbon black, styrene butadiene rubber (SBR) and CMC were dissolved into solvent deionized water according to the weight ratio of 95.5:1.2:1.3:1.5, and uniformly mixed to prepare negative electrode slurry; then a negative electrode current collector was uniformly coated with the negative electrode slurry, and dried to obtain a negative electrode membrane; and the negative electrode membrane was subjected to cold pressing and slitting to obtain the negative electrode plate.

(3) Preparation of an electrolyte solution: fully dried lithium salt (LiPF₆) was dissolved into a mixed solvent of ethylene carbonate (EC), ethyl methyl carbonate (EMC) and diethyl carbonate (DEC) in a volume ratio of 20:20:60 in an argon atmosphere glove box with water content <10ppm, and then an additive vinylene carbonate (VC) was added, and uniformly mixed to obtain the electrolyte solution. The concentration of the lithium salt was 1 mol/L.

(4) Preparation of separator: a conventional polypropylene membrane was used as the separator.

(5) Assembly of lithium-ion battery: the positive electrode plate, the separator and the negative electrode plate were sequentially stacked, the separator was positioned between the positive electrode plate and the negative electrode plate to play an isolating role, and then the positive electrode plate, the isolating film and the negative electrode plate were wound to obtain an electrode assembly; and the electrode assembly was placed in a battery case, the electrolyte solution was injected after drying, and then the lithium-ion battery was manufactured by processes such as formation and standing.

An Example 1: the positive electrode plate 1, the separator, the negative electrode plate and the electrolyte solution were assembled by the above method to obtain the lithium-ion battery as the Example 1.

An Example 2: the positive electrode plate 2, the separator, the negative electrode plate and the electrolyte solution were assembled by the above method to obtain the lithium-ion battery as the Example 2.

An Example 3: the positive electrode plate 3, the separator, the negative electrode plate and the electrolyte solution were assembled by the above method to obtain the lithium-ion battery as the Example 3.

An Example 4: the positive electrode plate 4, the separator, the negative electrode plate and the electrolyte solution were assembled by the above method to obtain the lithium-ion battery as the Example 4.

An Example 5: the positive electrode plate 5, the separator, the negative electrode plate and the electrolyte solution were assembled by the above method to obtain the lithium-ion battery as the Example 5.

An Example 6: the positive electrode plate 6, the separator, the negative electrode plate and the electrolyte solution were assembled by the above method to obtain the lithium-ion battery as the Example 6.

An Example 7: the positive electrode plate 7, the separator, the negative electrode plate and the electrolyte solution were assembled by the above method to obtain the lithium-ion battery as the Example 7.

An Example 8: the positive electrode plate 8, the separator, the negative electrode plate and the electrolyte solution were assembled by the above method to obtain the lithium-ion battery as the Example 8.

An Example 9: the positive electrode plate 9, the separator, the negative electrode plate and the electrolyte solution were assembled by the above method to obtain the lithium-ion battery as the Example 9.

An Example 10: the positive electrode plate 10, the separator, the negative electrode plate and the electrolyte solution were assembled by the above method to obtain the lithium-ion battery as the Example 10.

An Example 11: the positive electrode plate 11, the separator, the negative electrode plate and the electrolyte solution were assembled by the above method to obtain the lithium-ion battery as the Example 11.

An Example 12: the positive electrode plate 12, the separator, the negative electrode plate and the electrolyte solution were assembled by the above method to obtain the lithium-ion battery as the Example 12.

An Example 13: the positive electrode plate 13, the separator, the negative electrode plate and the electrolyte solution were assembled by the above method to obtain the lithium-ion battery as the Example 13.

An Example 14: the positive electrode plate 14, the separator, the negative electrode plate and the electrolyte solution were assembled by the above method to obtain the lithium-ion battery as the Example 14.

An Example 15: the positive electrode plate 15, the separator, the negative electrode plate and the electrolyte solution were assembled by the above method to obtain the lithium-ion battery as the Example 15.

An Example 16: the positive electrode plate 16, the separator, the negative electrode plate and the electrolyte solution were assembled by the above method to obtain the lithium-ion battery as the Example 16.

An Example 17: the positive electrode plate 17, the separator, the negative electrode plate and the electrolyte solution were assembled by the above method to obtain the lithium-ion battery as the Example 17.

An Example 18: the positive electrode plate 18, the separator, the negative electrode plate and the electrolyte solution were assembled by the above method to obtain the lithium-ion battery as the Example 18.

An Example 19: the positive electrode plate 19, the separator, the negative electrode plate and the electrolyte solution were assembled by the above method to obtain the lithium-ion battery as the Example 19.

An Example 20: the positive electrode plate 20, the separator, the negative electrode plate and the electrolyte solution were assembled by the above method to obtain the lithium-ion battery as the Example 20.

An Example 21: the positive electrode plate 21, the separator, the negative electrode plate and the electrolyte solution were assembled by the above method to obtain the lithium-ion battery as the Example 21.

A Contrast Example 1: the positive electrode plate 22, the separator, the negative electrode plate and the electrolyte solution were assembled by the above method to obtain the lithium-ion battery as the Contrast Example 1.

Product parameters of different examples are shown in Table 1.

**Table 1: Product parameters of contrast example and different embodiments**

| No. | First coating | | Second coating | | Conductive layer | | |
|---|---|---|---|---|---|---|---|
| | First active material | Thickness/µm | Second active material | Thickness/µm | Conductive agent | Thickness/µm | Conductive agent content/% |
| Contrast Example 1 | LiFePO₄ | 130 | NCM622 | 50 | / | / | / |
| Example 1 | LiFePO₄ | 130 | NCM622 | 50 | Conductive carbon black | 1 | 97 |
| Example 2 | LiFePO₄ | 130 | NCM622 | 50 | Conductive carbon black | 5 | 97 |
| Example 3 | LiFePO₄ | 130 | NCM622 | 50 | Conductive carbon black | 10 | 97 |
| Example 4 | LiFePO₄ | 130 | NCM622 | 50 | Conductive carbon black | 15 | 97 |
| Example 5 | LiFePO₄ | 40 | NCM622 | 50 | Conductive carbon black | 5 | 97 |
| Example 6 | LiFePO₄ | 70 | NCM622 | 50 | Conductive carbon black | 5 | 97 |
| Example 7 | LiFePO₄ | 140 | NCM622 | 50 | Conductive carbon black | 5 | 97 |
| Example 8 | LiFePO₄ | 160 | NCM622 | 50 | Conductive carbon black | 5 | 97 |
| Example 9 | LiFePO₄ | 130 | NCM622 | 40 | Conductive carbon black | 5 | 97 |
| Example 10 | LiFePO₄ | 130 | NCM622 | 60 | Conductive carbon black | 5 | 97 |
| Example 11 | LiFePO₄ | 130 | NCM622 | 80 | Conductive carbon black | 5 | 97 |
| Example 12 | LiMnFePO₄ | 130 | NCM622 | 50 | Conductive carbon black | 5 | 97 |
| Example 13 | LiFePO₄ | 130 | LiCoO₂ | 50 | Conductive carbon black | 5 | 97 |
| Example 14 | LiFePO₄ | 130 | NCM622 | 50 | Conductive carbon black | 20 | 97 |
| Example 15 | LiFePO₄ | 30 | NCM622 | 50 | Conductive carbon black | 5 | 97 |
| Example 16 | LiFePO₄ | 170 | NCM622 | 50 | Conductive carbon black | 5 | 97 |
| Example 17 | LiFePO₄ | 130 | NCM622 | 30 | Conductive carbon black | 5 | 97 |
| Example 18 | LiFePO₄ | 130 | NCM622 | 90 | Conductive carbon black | 5 | 97 |
| Example 19 | LiFePO₄ | 130 | NCM622 | 50 | Conductive carbon black | 5 | 90 |
| Example 20 | LiFePO₄ | 130 | NCM622 | 50 | Conductive carbon black | 5 | 93 |
| Example 21 | LiFePO₄ | 130 | NCM622 | 50 | Conductive carbon black | 5 | 99 |

The test process of relevant parameters is described below.

### 1. Cycle performance test

At the temperature of 25/45°C, the battery cell was charged to 4.3 V at a constant current of 1 C, and was further charged to reach current of 0.05 C at a constant voltage of 4.3 V, and then the battery was discharged to 3 V at a constant current of 1 C, which formed one charge-discharge cycle process, and the discharge capacity of the current cycle was the discharge capacity of the first cycle. The battery was tested by multiple charge-discharge cycles according to the above mode, the discharge capacity of the 200th cycle was detected, and the capacity retention ratio of the battery cell after the cycles was calculated. Capacity retention ratio of battery after 200 cycles (%) = [discharge capacity of 200th cycle/discharge capacity of first cycle] x 100%.

### 2. Test of energy density

At an environment with room temperature (25°C±2°C), discharging was carried out to reach lower limit voltage in a constant current discharge form (1/3C multiplying power), standing was performed for 30 min, then charging was carried out to reach an upper limit cut-off voltage in a constant current and constant voltage charging form (constant current of 1/3C, charging at constant voltage to reach 1/20C), standing was performed for 30 min, and the discharge energy E (in Wh) was calculated; and the process was repeated for three times, the average value of the discharge energy E of the three times was recorded as E₀, and divided by the volume V of the battery cell with a hard case, and thus the volume energy density (in Wh/L) = E₀/V.

According to the above method, the battery performance test was respectively performed on the prepared Contrast Example 1 and the Examples 1-21, and the results are shown in Table 2.

**Table 2: Performance test results of contrast example and different embodiments**

| No. | Capacity retention ratio after 200 cycles at 25°C | Capacity retention ratio after 200 cycles at 45°C | Volume energy density/(Wh/L) |
|---|---|---|---|
| Contrast Example 1 | 97.10% | 96.20% | 528 |
| Example 1 | 98.10% | 97.20% | 538 |
| Example 2 | 98.30% | 97.50% | 533 |
| Example 3 | 98.40% | 97.50% | 527 |
| Example 4 | 98.40% | 97.40% | 520 |
| Example 5 | 98.30% | 97.30% | 560 |
| Example 6 | 98.30% | 97.20% | 548 |
| Example 7 | 98.20% | 97.50% | 511 |
| Example 8 | 98.40% | 97.40% | 502 |
| Example 9 | 98.30% | 97.40% | 514 |
| Example 10 | 98.20% | 97.10% | 535 |
| Example 11 | 98.40% | 97.50% | 546 |
| Example 12 | 98.30% | 97.40% | 525 |
| Example 13 | 98.30% | 97.30% | 523 |
| Example 14 | 98.50% | 97.60% | 505 |
| Example 15 | 98.40% | 97.40% | 560 |
| Example 16 | 98.40% | 97.30% | 497 |
| Example 17 | 98.30% | 97.10% | 508 |
| Example 18 | 98.30% | 97.20% | 554 |
| Example 19 | 98.10% | 97.30% | 528 |
| Example 20 | 98.20% | 97.50% | 530 |
| Example 21 | 98.40% | 97.70% | 538 |

According to the result comparison of the Contrast Example 1 and the Examples 1-4, the conductive layer is arranged between the first coating and the second coating to connect the first active material with the second active material, and therefore, the cycle performance of the battery can be improved.

According to the result comparison of the Examples 1-4 and the Example 14, it is needed to set the thickness of the conductive layer in a proper range, and if the thickness of the conductive layer is extremely large, the proportion of the active materials in the active material layer will be reduced, and as a result, the energy density of the battery is reduced.

According to the result comparison of the Example 2 and the Examples 19-21, in a case of a certain thickness of the conductive layer, within a certain range, the higher the content of the conductive agent in the conductive layer, the better the cycle performance of the battery, and the higher the energy density.

Although the present application is described with reference to the preferred embodiments, without departing from the scope of the present application, various improvements may be made to it and parts therein may be replaced with equivalents. In particular, the technical features mentioned in the various Examples can be combined in any manner as long as there is no structural conflict. The present application is not limited to the particular Examples disclosed herein, but rather includes all technical solutions falling within the scope of the claims.

## Claims

1. A positive electrode plate, comprising:
a positive electrode current collector;
a first coating which is arranged on a surface of at least one side of the positive electrode current collector and comprises a first active material;
a second coating which comprises a second active material that is different from the first active material; and
a conductive layer which is arranged between the first coating and the second coating and is used for isolating the first coating from the second coating.

2. The positive electrode plate according to claim 1, wherein the first active material comprises at least one of an olivine-structure phosphate material and a spinel material.

3. The positive electrode plate according to claim 2, wherein the olivine-structure phosphate material comprises LiₐFe_{b}M_{1-b}P₁₋ₘO₄₋ₙ, wherein M comprises at least one of other metal elements except Fe, 0≤a≤1.1, 0.3≤b≤1, 0≤m≤0.1, and 0≤n≤0.1, and optionally, M comprises at least one of Mn, Al, Cu, Mg, Zn, Ni, Ti, V, Zr, Co, Ga, Sn, Sb, Nb, and Ge; and optionally, the olivine-structure phosphate material comprises at least one of lithium iron phosphate and lithium iron manganese phosphate.

4. The positive electrode plate according to claim 2 or 3, wherein the spinel material comprises LiNi_{c}Mn_{2-c}O₄, wherein 0≤c<2; and optionally, the spinel material comprises lithium manganate.

5. The positive electrode plate according to any one of claims 1 to 4, wherein the second active material comprises a layered transition metal oxide.

6. The positive electrode plate according to claim 5, wherein the layered transition metal oxide comprises at least one of LiCoO₂, LiMnO₂, LiNiO₂, Li_{a'}NiₓCo_{y}M¹_{1-x-y}O_{2+d}, and zLi₂MnO₃·(1-z)LiM²O₂, wherein M¹ comprises at least one of Mn, Zr, Al, B, Ta, Mo, W, Nb, Sb, and La; M² comprises at least one of Co, Ni, and Mn; 0.5≤x≤1.0, 0≤y<0.5, x+y<1, 0.2≤a'<1.2, -0.02≤d<0.02, 0<z<1; and optionally, the layered transition metal oxide comprises at least one of Li(Ni_{0.6}Co_{0.2}Mn_{0.2})_{1.15}O₂, and Li(Ni_{0.5}Co_{0.2}Mn_{0.3})_{1.07}O₂.

7. The positive electrode plate according to any one of claims 1 to 6, wherein the conductive layer comprises a conductive agent and a binder.

8. The positive electrode plate according to claim 7, wherein the conductive agent comprises at least one of conductive carbon black, superconducting carbon, carbon dots, Ketjen black and carbon nanotubes.

9. The positive electrode plate according to claim 7 or 8, wherein the binder comprises at least one of polyvinylidene fluoride, styrene-polybutene rubber, polytetrafluoroethylene, a vinylidene difluoride-tetrafluoroethylene-propylene terpolymer, a vinylidene difluoride-hexafluoropropylene-tetrafluoroethylene terpolymer, a tetrafluoroethylene-hexafluoropropylene copolymer, a vinylidene fluoride-hexafluoropropylene copolymer, a vinylidene fluoride-trichloroethylene copolymer, fluorine-containing acrylate resin, polyacrylonitrile, polyvinylpyrrolidone, polyvinyl acetate, polyethylene-co-vinyl acetate, polyethylene oxide and polyarylester.

10. The positive electrode plate according to any one of claims 1 to 9, wherein the thickness of the conductive layer is 1-15 µm, and optionally, the thickness of the conductive layer is 5-10 µm.

11. The positive electrode plate according to any one of claims 1 to 10, wherein the thickness of the first coating is 40-160 µm, and optionally, the thickness of the first coating is 70-140 µm.

12. The positive electrode plate according to any one of claims 1 to 11, wherein the thickness of the second coating is 40-80 µm, and optionally, the thickness of the second coating is 40-60 µm.

13. The positive electrode plate according to any one of claims 1 to 12, wherein on the basis of the total weight of the conductive layer, the conductive layer comprises 1wt%-10wt% of the binder, and optionally, 3wt%-7wt%.

14. The positive electrode plate according to any one of claims 1 to 13, wherein on the basis of the total weight of the conductive layer, the conductive layer comprises 90wt%-99wt% of the conductive agent, and optionally, 93wt%-97wt%.

15. The positive electrode plate according to any one of claims 1 to 14, wherein on the basis of the total weight of the first coating, the first active material accounts for 90wt%-98wt%, and optionally, 96wt%-97wt%.

16. The positive electrode plate according to any one of claims 1 to 15, wherein on the basis of the total weight of the first coating, the first coating comprises 0.1wt%-1wt% of the conductive agent, and optionally, 0.4wt%-0.6wt%.

17. The positive electrode plate according to any one of claims 1 to 16, wherein on the basis of the total weight of the first coating, the first coating comprises 1wt%-2wt% of the binder, and optionally, 1.2wt%-1.4wt%.

18. The positive electrode plate according to any one of claims 1 to 17, wherein on the basis of the total weight of the second coating, the second active material accounts for 90wt%-98wt%, and optionally, 96wt%-97wt%.

19. The positive electrode plate according to any one of claims 1 to 18, wherein on the basis of the total weight of the second coating, the second coating comprises 0.1wt%-1wt% of the conductive agent, and optionally, 0.4wt%-0.6wt%.

20. The positive electrode plate according to any one of claims 1 to 19, wherein on the basis of the total weight of the second coating, the second coating comprises 1wt%-2wt% of the binder, and optionally, 1.2wt%-1.4wt%.

21. A preparation method for a positive electrode plate, comprising:
providing a positive current collector, and arranging a first coating, a second coating and a conductive layer on the positive current collector,
wherein the first coating is arranged on the surface of at least one side of the positive current collector, the conductive layer is arranged between the first coating and the second coating, the first coating comprises a first active material, and the second coating comprises a second active material which is different from the first active material.

22. A battery cell, comprising the positive electrode plate according to any one of claims 1 to 20.

23. A battery, comprising the battery cell according to claim 22.

24. An electrical apparatus, comprising the battery according to claim 23.
